# FASCICULE DE BREVET EUROPEEN

(11) **EP 2 775 578 B1**
(45) Date de publication et mention de la délivrance du brevet: **20.04.2016**
(21) Numéro de dépôt: 14154476.7
(22) Date de dépôt: 10.02.2014
(51) Int. Cl.: H02G 3/04, H02G 3/06

(54) **Système de verrouillage pour chemin de câbles**
Verriegelungsvorrichtung für Kabelkanäle.
System for locking cable raceways.

(30) Priorité: 06.03.2013 FR 1352002
(43) Date de publication de la demande: 10.09.2014
(73) Titulaire: Niedax France, 62400 Béthune (FR)
(72) Inventeur: Lefait, Philippe, 62400 Bethune (FR); Delforge, David, 62400 Bethune (FR)
(74) Mandataire: Louiset, Raphaël

(56) Documents cités:
- GB-A- 2 485 071
- US-B1- 6 239 364

## Description

L'invention a trait au domaine des chemins de câbles, et plus précisément à l'assemblage de tronçons de deux chemins de câbles.

Un chemin de câbles est une structure permettant de supporter, aussi bien dans une configuration verticale qu'horizontale, notamment des câbles électriques, des câbles téléphoniques, des câbles de fibres optiques, des câbles de réseau informatique. Les chemins de câbles sont généralement réalisés en métal, notamment en acier inoxydable mais ils peuvent être réalisés en matière plastique ou composite.

Les chemins de câbles en treillis de fil, sont formés de fils longitudinaux, appelés fils de chaîne, croisés et soudés avec des fils transversaux, appelés fils de trame. Les chemins de câbles peuvent subir un traitement ultérieur, en fonction de l'environnement dans lequel ils sont destinés à être placés. Ainsi, les chemins de câbles métalliques peuvent subir une galvanisation, être plastifiés ou encore revêtus d'une couche de résine époxy.

Les chemins de câbles ont ainsi pour objectif de maintenir les câbles généralement en hauteur et de permettre un accès facile à ceux-ci. Entre autre, il est impératif que le montage de ces chemins de câbles soit facile à mettre en oeuvre par des opérateurs sur chantier.

Les chemins de câbles en treillis de fil sont traditionnellement munis d'une série de fils de chaine orientés selon l'axe longitudinal du tronçon, et de plusieurs fils de trame conférant au tronçon une forme générale de U.

Le document US 6,239,364 (OBO BETTERMAN) décrit un tronçon de chemin de câbles comprenant une portion d'extrémité mâle et une portion d'extrémité femelle.

Suivant ce document, la portion d'extrémité mâle présente une section rétrécie apte à être insérée dans la portion d'extrémité femelle d'un second tronçon adjacent au premier. La fixation entre les deux tronçons se fait au moyen d'un emboîtement du premier tronçon dans un second tronçon adjacent.

Le modèle d'utilité espagnol ES 1 076 189 (BASOR) propose un tronçon de chemin de câbles en treillis de fil en forme de U comprenant une portion d'extrémité mâle et une portion d'extrémité femelle, toutes deux ayant des dimensions identiques. La portion d'extrémité mâle comprend une pince prolongeant un plan de fond du tronçon, et deux crochets latéraux prolongeant chacun une paroi latérale. L'assemblage du chemin de câbles se fait en jouxtant la portion d'extrémité mâle d'un premier tronçon avec la portion d'extrémité femelle d'un second tronçon. La fixation est faite à l'aide de la pince et des deux crochets, ceux-ci venant s'emboiter dans la portion d'extrémité femelle d'un second tronçon adjacent.

Ces techniques présentent néanmoins un certain nombre d'inconvénients parmi lesquels la faiblesse structurale en flexion au niveau des jonctions de tronçons ainsi que l'impossibilité d'ajuster la longueur du chemin de câbles ou encore la possibilité de détérioration des crochets lors du transport.

Les chemins de câbles pouvant être soumis à un poids important des fils électriques, il est donc important que l'emboitement des tronçons soit résistant.

Un premier objectif est de proposer un chemin de câbles résistant.

Un second objectif est de proposer un chemin de câbles à longueur adaptable, sur chantier.

Un troisième objectif est de proposer un tronçon de chemin de câbles facile d'utilisation.

Un quatrième objectif est de proposer un tronçon de chemin de câbles limitant les risques de détérioration pendant son transport.

A cet effet, il est proposé en premier lieu un tronçon de chemin de câbles en treillis de fil à section transversale en U comprenant un fond et deux ailes latérales, muni de fils de chaîne et de fils de trame, ce tronçon ayant une portion d'extrémité femelle à une première extrémité et une portion d'extrémité mâle à une seconde extrémité, complémentaire de la portion d'extrémité femelle et apte à venir s'emboîter dans la portion d'extrémité femelle d'un tronçon adjacent, dans lequel la portion d'extrémité femelle comprend au moins un fil de trame femelle muni d'un créneau s'étendant vers l'intérieur dans le plan du fond du tronçon, et la portion d'extrémité mâle comprend une section d'extrémité rétrécie en hauteur et en largeur, cette portion d'extrémité mâle comprenant au moins un fil de trame mâle étant doté d'un décroché présentant une courbure faisant saillie par rapport au plan du fond du tronçon, le créneau de la portion d'extrémité femelle étant apte à venir crocheter le décroché du fil de trame mâle de la portion d'extrémité femelle d'un tronçon adjacent.

Un tel tronçon présente les avantages d'être résistant en flexion et la possibilité d'ajuster la longueur du chemin de câble.

Diverses caractéristiques supplémentaires peuvent être prévues, seules ou en combinaison :
- au moins un fil de trame mâle comprend un crochet d'encliquetage faisant saillie par rapport à un plan formé par une aile latérale du tronçon ;
- le décroché du fil de trame mâle fait saillie dans un plan sensiblement perpendiculaire au plan du fond de tronçon ;
- les fils de chaîne latéraux sont soudés sur la face interne d'au moins un fil de trame mâle ;
- les fils de chaîne latéraux sont soudés sur la face externe d'au moins un fil de trame femelle.

Il est proposé en second lieu un chemin de câbles comprenant au moins deux tronçons tels que présentés ci-dessus.

Dans une réalisation, celui-ci comprend des moyens aptes à régler la longueur et verrouiller le chemin de câbles.

Il est proposé en troisième lieu un procédé de montage de chemins de câbles du type présenté ci-dessus, procédé comprenant trois étapes :
- une première étape consistant à positionner la portion d'extrémité mâle d'un premier tronçon au dessus de la portion d'extrémité femelle d'un second tronçon ;
- une seconde étape consistant à encliqueter la portion d'extrémité mâle dans la portion d'extrémité femelle ;
- une troisième étape consistant à solidariser les tronçons.

D'autres caractéristiques et avantages de l'invention apparaîtront plus clairement et de manière concrète à la lecture de la description ci-après de modes de réalisation, laquelle est faite en référence aux dessins annexés dans lesquels :
- La figure 1 est une vue en perspective de dessus d'un tronçon en treillis de fils.
- La figure 2 est une vue en perspective de dessus d'un chemin de câbles avant assemblage.
- La figure 3 est une vue en perspective de dessus de l'assemblage d'un chemin de câbles à la fin de la deuxième étape.
- La figure 4 est une vue en perspective de dessus d'un chemin de câbles assemblé.
- La figure 5 est une vue en coupe d'un chemin de câbles selon le plan de coupe V-V de la figure 4.

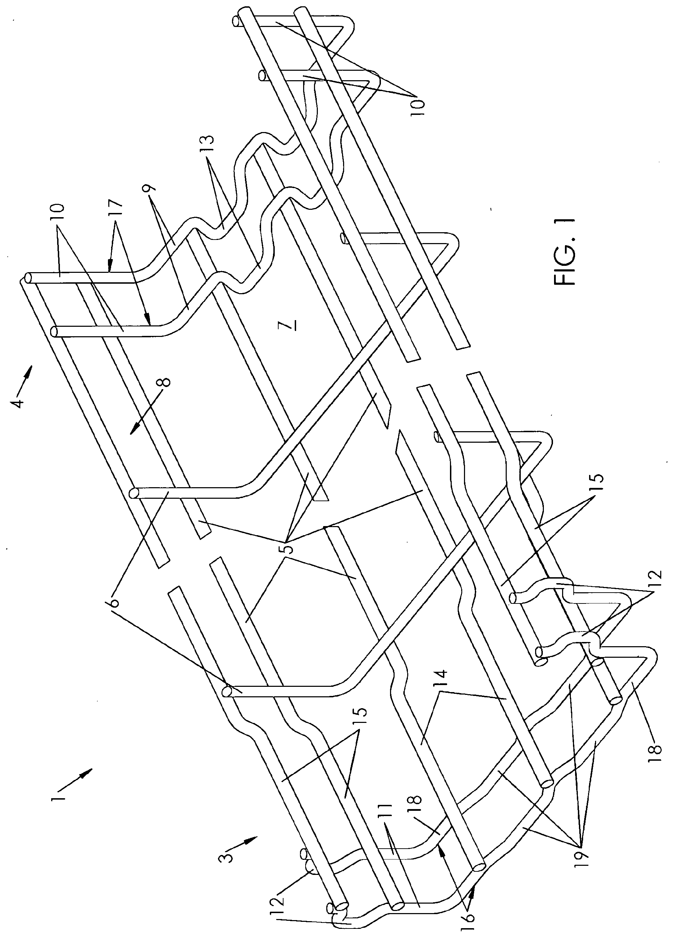

Sur la figure 1, est représenté un tronçon **1** de chemin **2** de câbles composé d'une portion **3** d'extrémité mâle, d'une portion **4** d'extrémité femelle ainsi que d'une portion centrale (non représentée) située entre les deux portions **3**, **4** d'extrémité mâle et femelle.

Le tronçon **1** est formé de fils **5** de chaîne longitudinaux et de fils **6** de trame transversaux en forme de U, ainsi le tronçon **1** comprend un fond **7** et deux ailes **8** latérales. Les fils **5** de chaîne sont montés soudés sur l'extérieur des fils **6** de trame. Dans un mode de réalisation représenté sur la figure 1, trois fils **5** de chaîne tapissent le fond **7** du tronçon **1** et chaque aile **8** latérale comprend deux fils **5** de chaîne.

La portion **4** d'extrémité femelle comprend deux fils de trame **17** femelle. Chaque fil de trame **17** femelle de la portion **4** d'extrémité femelle est composé d'une arête **9** femelle et de deux bras **10** femelle. Chaque arête **9** femelle est soudée à trois fils **5** de chaîne. La portion d'arête femelle située entre chaque fil **6** de trame comprend un verrou **13** en forme de créneau présentant une courbure s'étendant vers l'intérieur dans le plan du fond **7** du tronçon.

La portion **3** d'extrémité mâle représentée sur les figures 1 à **4** comprend un rétrécissement longitudinal et un rétrécissement transversal de sorte que la section de la portion **3** d'extrémité mâle soit inférieure à celle du reste du tronçon **1**, le rétrécissement étant obtenu par déformation des fils **5** de chaîne. Une première déformation **14** longitudinale est opérée de sorte à diminuer la largeur de la portion **3** d'extrémité mâle et une seconde déformation **15** transversale des fils **5** de chaîne situés dans le plan de fond **7** de tronçon **1**, permet d'en diminuer la hauteur. Un tel rétrécissement permet d'insérer la portion **3** d'extrémité mâle dans la portion **4** d'extrémité femelle.

La portion **3** d'extrémité mâle comprend deux fils de trame **16** mâle, lesquels ont des dimensions identiques aux fils **6** de trame du reste du tronçon **1**. Cependant, contrairement aux fils **6** de trame du reste du tronçon **1**, dans la portion **3** d'extrémité mâle, les fils **5** de chaîne sont soudés sur la face interne des fils de trame **16** mâle comme illustré sur la figure 1.

Les fils de trame **16** mâle comprennent deux bras **11** mâle et une arête **18** mâle. Dans le mode de réalisation illustré sur les figures, chaque bras **11** mâle est soudé à deux fils **5** de chaîne. Entre les deux fils **5** de chaîne, un crochet **12** s'étend en saillie par rapport au plan formé par l'aile **8** latérale du tronçon **1**. Ce crochet **12** est formé par déformation des fils de trame **16** mâle, et sa largeur est sensiblement identique à l'espace séparant les fils **6** de trame latéraux.

L'arête **18** mâle est soudée à trois fils **5** de chaîne, définissant entre chacun des fils **5** de chaîne un décroché **19** formé par déformation du fil **6** de trame. Les décrochés **19** font alors saillie perpendiculairement au plan de fond **7** du tronçon **1** et sont aptes à coopérer avec les verrous **13** de la portion **4** d'extrémité femelle d'un second tronçon adjacent.

L'assemblage d'un chemin **2** de câbles s'effectue en trois étapes et nécessite au moins deux tronçons **1** à l'image de ceux précédemment décrits.

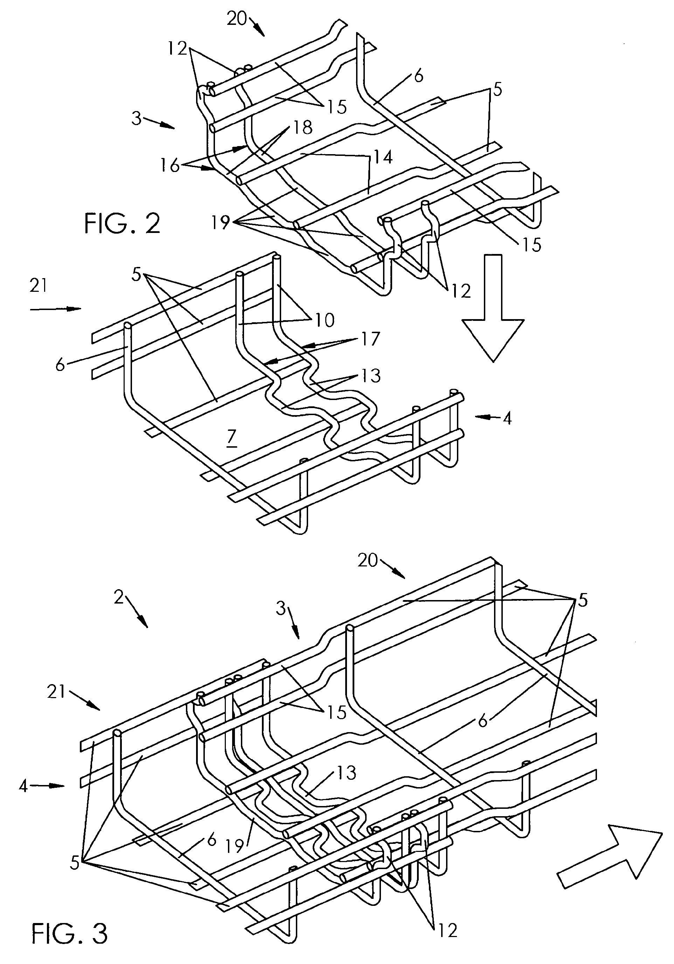

Une première étape consiste à positionner la portion **3** d'extrémité mâle d'un premier **20** tronçon au dessus de la portion **4** d'extrémité femelle d'un second **21** tronçon comme représenté sur la figure 2.

La deuxième étape consiste à insérer le premier **20** tronçon dans le second **21** tronçon. Plus précisément, la portion **3** d'extrémité mâle du premier **20** tronçon est insérée dans la portion **4** d'extrémité femelle du second **21** tronçon, suivant la flèche de la figure 2.

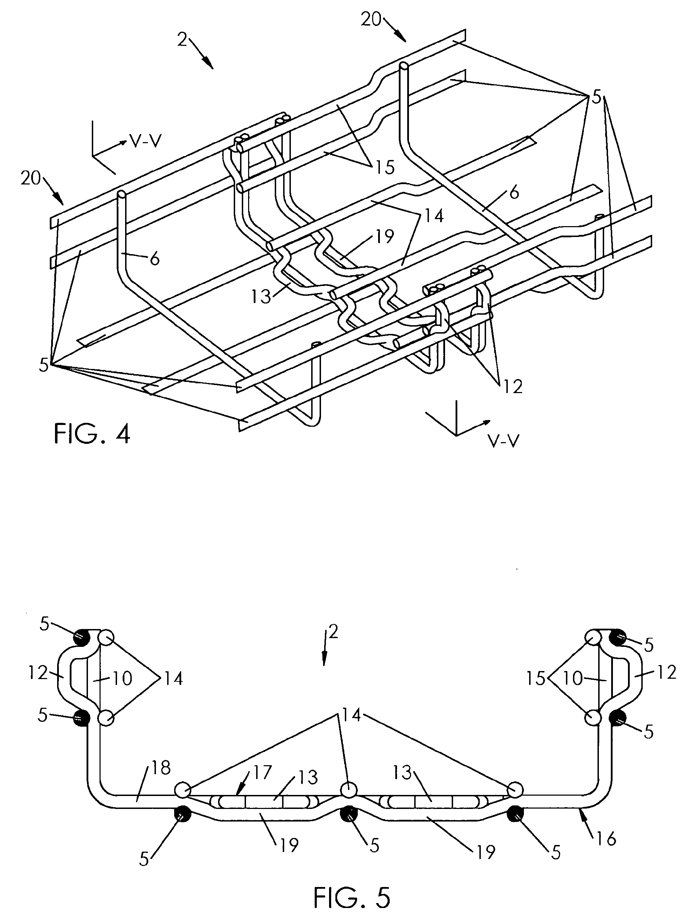

Pour cela, l'opérateur exerce une force sur les ailes **8** latérales de la portion **3** d'extrémité mâle du premier **20** tronçon de sorte à les rapprocher l'une de l'autre par déformation élastique. Les ailes **8** latérales ainsi rapprochées permettent de faciliter l'insertion des crochets **12** entre deux fils **5** de chaîne de la portion **4** d'extrémité femelle du second tronçon comme cela est visible sur la figure 5.

Selon le matériau utilisé pour la fabrication des tronçons **1** de chemin **2** de câbles, la force exercée par l'opérateur peut varier. En effet, il faudra un effort plus important pour un matériau résistant que pour un matériau souple. Il peut même être envisagé qu'en utilisant un matériau souple, les ailes **8** latérales se rapprochent l'une de l'autre par la simple action des fils **5** de chaîne sur les crochets **12**.

La troisième et dernière étape consiste alors à verrouiller les deux tronçons **1** en tirant le second **21** tronçon dans la direction opposée au premier **20** tronçon de sorte à venir loger les décrochés **19** en dessous des verrous **13**. A ce stade, le chemin **2** de câbles est formé et verrouillé.

Dans un mode de réalisation, des bossages sous les verrous **13** (non représentés dans les dessins), permettent de bloquer les décrochés **19** afin d'éviter tout mouvement inverse, empêchant ainsi le déverrouillage des chemins **2** de câbles. Ces bossages se présentent sous la forme de déformations de fil orientées vers le bas. Le passage des décrochés **19** par-dessus ces bossages crée un « clic » sonore sécurisant au montage.

Dans le mode de réalisation illustré sur les figures, les deux fils **6** de trame de chaque portion **3**, **4** d'extrémité sont utilisés. Il aurait néanmoins été possible de positionner le fil de trame **16** mâle plus en amont ou au contraire plus en aval de sorte à régler la longueur du chemin **2** de câbles ainsi assemblé.

On comprend dès lors que les fils de trame mâle et femelle **16**, **17** utilisés pour le verrouillage confèrent également une fonction de réglage de la longueur du chemin **2** de câbles. Un second mode de réalisation de l'invention, est un tronçon **1** dont les portions **3**, **4** d'extrémité comprennent une pluralité de fils de trame **16** mâle ou fils de trame **17** femelle de sorte à ajuster au mieux la longueur du chemin **2** de câbles final.

La flexion induite par le poids des câbles, met à rude épreuve les dispositifs de verrouillage des chemins **2** de câbles. La jonction entre les tronçons **1** des chemins **2** de câbles revêt donc une importance particulière. Un nombre croissant de fils de trame **16** mâle et fils de trame **17** femelle en mode "verrouillé", confère au chemin **2** de câbles un verrouillage amélioré. Par ailleurs l'architecture "créneau" des fils de trame **17** femelle augmente la surface d'appui sur les décrochés **19** des fils de trame **16** mâle, assurant une meilleure résistance en flexion.

## Revendications

1. Tronçon (**1**) de chemin (**2**) de câbles en treillis de fil à section transversale en U comprenant un fond (**7**) et deux ailes (**8**) latérales, muni de fils (**5**) de chaîne et de fils (**6**) de trame, ce tronçon (**1**) ayant une portion (**4**) d'extrémité femelle à une première extrémité et une portion (**3**) d'extrémité mâle à une seconde extrémité, complémentaire de la portion (**4**) d'extrémité femelle et apte à venir s'emboîter dans la portion (**4**) d'extrémité femelle d'un tronçon (**1**) adjacent, **caractérisé en ce que** la portion (**4**) d'extrémité femelle comprend au moins un fil de trame (**17**) femelle muni d'un créneau (**13**) s'étendant vers l'intérieur dans le plan du fond (**7**) du tronçon (**1**), et la portion (**3**) d'extrémité mâle comprend une section d'extrémité rétrécie en hauteur et en largeur, cette portion (**3**) d'extrémité mâle comprenant au moins un fil de trame (**16**) mâle étant doté d'un décroché (**19**) présentant une courbure faisant saillie par rapport au plan du fond (**7**) du tronçon (**1**), le créneau (**13**) de la portion (**4**) d'extrémité femelle étant apte à venir crocheter le décroché (**19**) du fil de trame (**16**) mâle de la portion (**4**) d'extrémité femelle d'un tronçon adjacent.

2. Tronçon (**1**) selon la revendication 1 **caractérisé en ce qu'**au moins un fil de trame (**16**) mâle comprend un crochet (**12**) d'encliquetage faisant saillie par rapport à un plan formé par une aile (**8**) latérale du tronçon (**1**).

3. Tronçon (**1**) selon l'une quelconque des revendications précédentes **caractérisé en ce que** le décroché (**19**) du fil de trame (**16**) mâle fait saillie dans un plan sensiblement perpendiculaire au plan du fond (**7**) de tronçon.

4. Tronçon (**1**) selon l'une quelconque des revendications précédentes **caractérisé en ce que** les fils (**5**) de chaîne latéraux sont soudés sur la face interne d'au moins un fil de trame (**16**) mâle.

5. Tronçon (**1**) selon l'une quelconque des revendications précédentes **caractérisé en ce que** les fils (**5**) de chaîne latéraux sont soudés sur la face externe d'au moins un fil de trame (**17**) femelle.

6. Chemin (**2**) de câbles comprenant au moins deux tronçons (**1**) selon l'une quelconque des revendications précédentes.

7. Chemin (**2**) de câbles selon la revendication 6 **caractérisé en ce que** celui-ci comprend des moyens (**16**, **17**) aptes à régler la longueur et verrouiller le chemin (**2**) de câbles.

8. Procédé de montage d'un chemin de câbles du type présenté en revendications 6 ou 7, ce procédé étant **caractérisé en ce qu'**il comprend trois étapes :
- une première étape consistant à positionner la portion (**3**) d'extrémité mâle d'un premier (**20**) tronçon au dessus de la portion (**4**) d'extrémité femelle d'un second (**21**) tronçon ;
- une seconde étape consistant à encliqueter la portion (**3**) d'extrémité mâle dans la portion (**4**) d'extrémité femelle ;
- une troisième étape consistant à solidariser les tronçons (**1**).

## Patentansprüche

1. Abschnitt (1) einer Kabelrinne (2) aus einem Drahtgitter mit U-förmigem Querschnitt, der einen Boden (7) und zwei Seitenflügel (8) enthält, der mit Kettdrähten (5) und mit Schussdrähten (6) versehen ist, wobei dieser Abschnitt (1) einen Aufnahme-Endteil (4) an einem ersten Ende und einen Einsteck-Endteil (3) an einem zweiten Ende hat, der zum Aufnahme-Endteil (4) komplementär ist und in den Aufnahme-Endteil (4) eines benachbarten Abschnitts (1) eingesteckt werden kann, **dadurch gekennzeichnet, dass** der Aufnahme-Endteil (4) mindestens einen Aufnahme-Schussdraht (17), der mit einer Krenelierung (13) versehen ist, die sich in der Ebene des Bodens (7) des Abschnitts (1) nach innen erstreckt, und der Einsteck-Endteil (3) einen in Höhe und Breite verengten Endquerschnitt hat, wobei dieser Einsteck-Endteil (3) mindestens einen Einsteck-Schussdraht (16) enthält, der mit einem Absatz (19) versehen ist, welcher eine Krümmung aufweist, die bezüglich der Ebene des Bodens (7) des Abschnitts (1) vorsteht, wobei die Krenelierung (13) des Aufnahme-Endteils (4) sich in den Absatz (19) des Einsteck-Schussdrahts (16) des Aufnahme-Endteils (4) eines benachbarten Abschnitts einhaken kann.

2. Abschnitt (1) nach Anspruch 1, **dadurch gekennzeichnet, dass** mindestens ein Einsteck-Schussdraht (16) einen Einrasthaken (12) enthält, der bezüglich einer Ebene vorsteht, die von einem Seitenflügel (8) des Abschnitts (1) geformt wird.

3. Abschnitt (1) nach einem der vorhergehenden Ansprüche, **dadurch gekennzeichnet, dass** der Absatz (19) des Einsteck-Schussdrahts (16) in einer Ebene im Wesentlichen lotrecht zur Ebene des Abschnittsbodens (7) vorsteht.

4. Abschnitt (1) nach einem der vorhergehenden Ansprüche, **dadurch gekennzeichnet, dass** die seitlichen Kettdrähte (5) an die Innenseite mindestens eines Einsteck-Schussdrahts (16) geschweißt sind.

5. Abschnitt (1) nach einem der vorhergehenden Ansprüche, **dadurch gekennzeichnet, dass** die seitlichen Kettdrähte (5) an die Außenseite mindestens eines Aufnahme-Schussdrahts (17) geschweißt sind.

6. Kabelrinne (2), die mindestens zwei Abschnitte (1) nach einem der vorhergehenden Ansprüche enthält.

7. Kabelrinne (2) nach Anspruch 6, **dadurch gekennzeichnet, dass** sie Einrichtungen (16, 17) enthält, die in der Lage sind, die Länge einzustellen und die Kabelrinne (2) zu verriegeln.

8. Verfahren zur Montage einer Kabelrinne der in den Ansprüchen 6 und 7 dargestellten Art, wobei dieses Verfahren **dadurch gekennzeichnet ist, dass** es drei Schritte enthält:
- einen ersten Schritt, der darin besteht, den Einsteck-Endteil (3) eines ersten Abschnitts (20) über dem Aufnahme-Endteil (4) eines zweiten Abschnitts (21) zu positionieren;
- einen zweiten Schritt, der darin besteht, den Einsteck-Endteil (3) in den Aufnahme-Endteil (4) einzurasten;
- einen dritten Schritt, der darin besteht, die Abschnitte (1) fest miteinander zu verbinden.

## Claims

1. Section (1) of a cable tray (2) consisting of a wire trellis and having a U-shaped cross section comprising a base (7) and two side arms (8), provided with warp wires (5) and weft wires (6), this section (1) having a female end portion (4) at a first end and a male end portion (3) at a second end, the latter being complementary with the female end portion (4) and being able to fit into the female end portion (4) of an adjacent section (1), **characterized in that** the female end portion (4) comprises at least one female weft wire (17) provided with a notched shape (13) extending inwards in the plane of the base (7) of the section (1), and the male end portion (3) comprises an end segment of reduced height and width, this male end portion (3) comprising at least one male weft wire (16) being provided with a setback (19) having a curvature which projects from the plane of the base (7) of the section (1), the notched shape (13) of the female end portion (4) being able to hook into the setback (19) of the male weft wire (16) of the female end portion (4) of an adjacent section.

2. Section (1) according to Claim 1, **characterized in that** at least one male weft wire (16) comprises a snap-fitting hook (12) that projects from a plane formed by a side arm (8) of the section (1).

3. Section (1) according to either one of the preceding claims, **characterized in that** the setback (19) of the male weft wire (16) projects in a plane that is essentially perpendicular to the plane of the base (7) of the section.

4. Section (1) according to any one of the preceding claims, **characterized in that** the lateral warp wires (5) are welded onto the internal face of at least one male weft wire (16).

5. Section (1) according to any one of the preceding claims, **characterized in that** the lateral warp wires (5) are welded onto the external face of at least one female weft wire (17).

6. Cable tray (2) comprising at least two sections (1) according to any one of the preceding claims.

7. Cable tray (2) according to Claim 6, **characterized in that** it comprises means (16, 17) which are able to adjust the length and lock the cable tray (2).

8. Method for assembling a cable tray of the type presented in Claim 6 or 7, this method being **characterized in that** it comprises three steps:
- a first step consisting of positioning the male end portion (3) of a first section (20) above the female end portion (4) of a second section (21);
- a second step consisting of snap-fitting the male end portion (3) in the female end portion (4);
- a third step consisting of securing the sections (1).
